# EUROPEAN PATENT APPLICATION

(11) **EP 4 465 423 A1**
(43) Date of publication of application: **20.11.2024**
(21) Application number: 24166988.6
(22) Date of filing: 27.03.2024
(51) Int. Cl.: H01M 50/202, H01M 50/233, H01M 50/342

(54) **BATTERY DEVICE**

(30) Priority: 19.05.2023 KR 20230065146
(71) Applicant: SK On Co., Ltd., Seoul 03161 (KR)
(72) Inventor: KO, Jeong Woon, 34124 Daejeon (KR)
(74) Representative: Stolmár & Partner Patentanwälte PartG mbB

(57) **Abstract**

A battery device is disclosed.

In some implementations, the battery device may include a cell stack in which a plurality of battery cells are stacked, and a case configured to accommodate the cell stack therein. At least one rupture portion, configured to be rupturable by internal pressure of the case, may be disposed on at least one surface of the case.

## Description

This patent document claims the priority and benefits of Korean Patent Application No. 10-2023-0065146 filed on May 19, 2023.

### TECHNICAL FIELD

This disclosure relates to a battery device having high stability.

### BACKGROUND

Unlike primary batteries, secondary batteries may be charged and discharged, and thus may be applied to devices within various fields such as digital cameras, mobile phones, laptops, and hybrid vehicles. Secondary batteries include nickel-cadmium batteries, nickel-metal hydride batteries, nickel-hydrogen batteries, lithium secondary batteries, and the like.

Among these secondary batteries, a large amount of research has been conducted on lithium secondary batteries having high energy density and discharge voltage. Recently, lithium secondary batteries have been manufactured as flexible pouch-type battery cells, and have been used in the form of a module or pack in which multiple battery cells are connected to each other.

However, in case that multiple battery cells are disposed to be adjacent to each other, when one battery cell ignites, flames may propagate to other adjacent battery cells, causing secondary ignition or explosion. Accordingly, there is a need for a battery device capable of suppressing the propagation of the above-described flames.

### SUMMARY

According to an aspect of the present disclosure, it is possible to provide a battery device capable of rapidly discharging explosive by-products generated in the battery device due to ignition or explosion.

In some embodiments of the present disclosure, a battery device may include a cell stack in which a plurality of battery cells are stacked, and a case configured to accommodate the cell stack therein. A rupture portion, configured to be rupturable by internal pressure of the case, may be disposed on at least one surface of the case.

The rupture portion may have a rupture groove formed to be thinner than other portions of the rupture portion.

The battery device may further include a blade disposed on the at least one surface of the case, the blade configured to rupture the rupture portion.

The rupture portion may be configured to be deformed in shape by the internal pressure and to come into contact with the blade.

The case may include a rupture sheet including a first frame, and the rupture portion disposed in the first frame, and a cutter including a second frame, and the blade disposed in the second frame. The cutter may be disposed on the outside of the rupture sheet, and the blade may be disposed in a position corresponding to that of the rupture portion.

The blade includes a plurality of blades, and the plurality of blades may be disposed to correspond to one rupture portion.

The rupture portion may be deformed to have a hemispherical shape, and may protrude toward the cell stack. The rupture portion may protrude toward the blade and come into contact with the blade, when the internal pressure of the case increases.

At least a portion of an edge of the blade may be disposed to oppose a convex central portion of the rupture portion.

The rupture sheet may further include a protruding frame formed to protrude from the first frame. The rupture portion may be formed to extend from an end of the protruding frame.

The blade may be disposed to protrude from the second frame toward the rupture portion.

The blade may be disposed on the same plane as that of the second frame, and may be formed to have a sawtooth shape.

In some embodiments of the present disclosure, a battery device may include a cell stack in which a plurality of battery cells are stacked, and a case having an internal space in which the cell stack is accommodated. The case may include a rupture portion configured to be deformed by internal pressure of the case. At least a portion of the rupture portion may have a shape of a curved surface recessed toward the internal space of the case.

The battery device may further include a rupture sheet disposed on at least one side of the cell stack.

The rupture portion may be distributed throughout the rupture sheet.

The battery device may further include a blade configured to come into contact with a rupture portion as the rupture portion is deformed.

The rupture portion may be disposed between the blade and the cell stack.

When one battery cell explodes, a rupture portion of a battery device according to an embodiment of the present disclosure may be rapidly ruptured by internal pressure, such that explosion by-products may be externally discharged. Accordingly, additional effects from explosion may be minimized.

### BRIEF DESCRIPTION OF DRAWINGS

Certain aspects, features, and advantages of the present disclosure are illustrated by the following detailed description with reference to the accompanying drawings.
FIG. 1 is a schematic perspective view of a battery device according to an embodiment of the present disclosure.
FIGS. 2 and 3 are exploded perspective views of the battery device illustrated in FIG. 1.
FIG. 4 is an exploded perspective view of the first case illustrated in FIG. 2.
FIG. 5 is a partial cross-sectional view taken along line I-I' of FIG. 1.
FIG. 6 is a cross-sectional view of a battery device according to another embodiment of the present disclosure.
FIG. 7 is a cross-sectional view of a battery device according to another embodiment of the present disclosure.
FIG. 8 is an exploded perspective view of the first case illustrated in FIG. 7.
FIG. 9 is a cross-sectional view of a battery device according to another embodiment of the present disclosure.
FIG. 10 is an exploded perspective view of the first case illustrated in FIG. 9.
FIG. 11 is a cross-sectional view of a battery device according to another embodiment of the present disclosure.
FIG. 12 is a perspective view of the first case illustrated in FIG. 11.

### DETAILED DESCRIPTION

Hereinafter, embodiments of the present disclosure in this patent document are described by example embodiments with reference to the accompanying drawings. Some components are exaggerated, omitted, or schematically illustrated in the accompanying drawings, and a size of each component does not fully reflect an actual size.

The present disclosure can be implemented in some embodiments to provide a battery device.

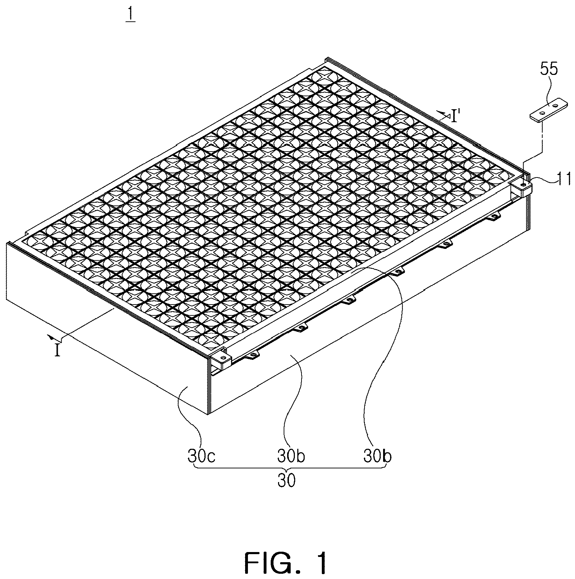

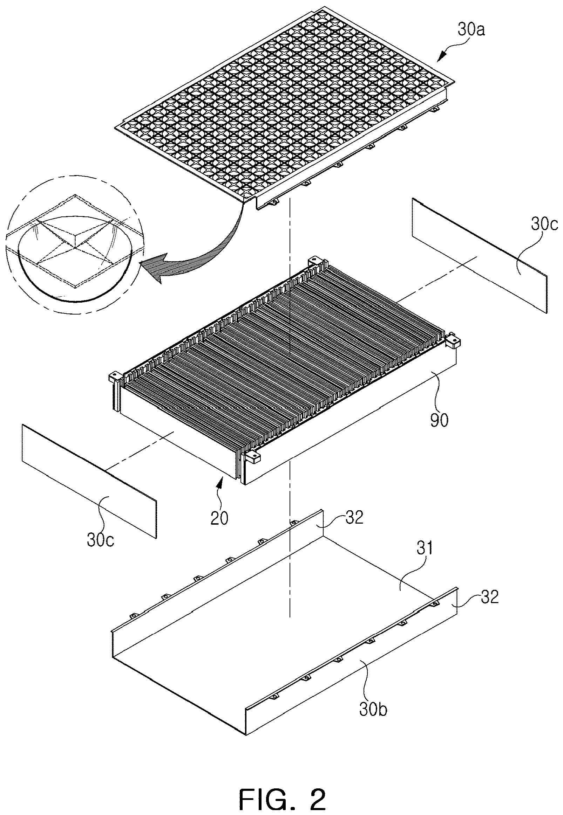

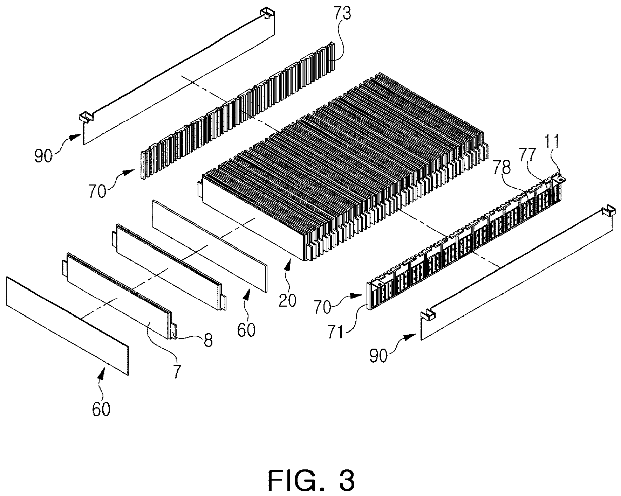

FIG. 1 is a schematic perspective view of a battery device according to an embodiment of the disclosed technology, and FIGS. 2 and 3 are exploded perspective views of the battery device illustrated in FIG. 1.

Referring to FIGS. 1 to 3, a battery device 1 may include a cell stack 20 in which a plurality of secondary battery cells 7 are stacked, and a case 30 configured to accommodate the cell stack 20 therein. And a rupture portion 43, configured to be rupturable by internal pressure of the case 30, may be disposed on at least one surface of the case 30.

The cell stack 20 in which a plurality of battery cells 7 are stacked may be formed to have a hexahedral shape, and a state in which the plurality of battery cells 7 are stacked may be fixed by a tape or bracket. In the present embodiment, the battery cells 7 may be stacked on each other in a thickness direction.

Each of the battery cells 7 may be a pouch-type secondary battery, and may have a structure in which electrode leads 8 are disposed to be oriented in opposite directions. The battery cell 7, configured as described above, may be a secondary battery capable of being repeatedly charged and discharged, and may be a lithium (Li) battery or a nickel-hydrogen (Ni-MH) battery.

The battery cell 7 may be configured with an electrode assembly accommodated in a pouch-type cell case. In the present embodiment, the cell case may be formed by forming a single sheet of exterior material. More specifically, the cell case may be completed by forming one or two grooves in one exterior material, and then folding the exterior material such that the grooves form one space (hereinafter referred to as an accommodation portion). The accommodation portion may accommodate an electrode assembly and an electrolyte solution. The present disclosure is not limited to the above-described configuration, and the cell case may be formed by bonding two exterior materials to each other.

At least one barrier member 60 may be disposed between the battery cells 7.

The barrier member 60 may be provided to prevent explosion by-products, such as flames or gas, from propagating to other surrounding battery cells 7, when one battery cell 7 explodes. To this end, a plurality of barrier members 60 may be spaced apart from each other and interposed between the battery cells 7, and ends of the barrier members 60 may be coupled to a bus bar assembly 70. Accordingly, the battery cells 7 on opposite sides of one barrier member 60 may be spatially separated from each other. Thus, even when a battery cell 7 in one region explodes, an impact of the explosion on a battery cell 7 in another region may be minimized.

The barrier member 60 may include a material containing at least one of mica, metal, and resin. Here, the mica, metal, and resin may be materials, not easily melted by high-temperature flames, gas, or the like, and may be materials melting at 700°C or higher.

For example, a metal material may be formed of iron (Fe), copper (Cu), or aluminum (Al), or a metal alloy, and may be thermally treated. In addition, flames retardant plastics, synthetic resin, may be used as a resin material. In addition, the mica, metal, and resin may be synthesized or mixed to form the barrier member 60.

The bus bar assemblies 70 may be respectively disposed on side surfaces the battery cells 7 on which the electrode leads 8 are disposed, and may be coupled to the cell stack 20, and each bus bar assembly 70 may include at least one bus bar 77 and an insulating frame 71.

The insulating frame 71 may be formed of an insulating material, and may be formed to have a size corresponding to that of the entire side surface of the cell stack 20 which the bus bar assembly 70 opposes.

The insulating frame 71 may have a plurality of through-holes 73 into which the electrode leads 8 are inserted, and at least one bus bar 77 and a terminal 11 may be fixedly coupled to an external surface of the insulating frame 71. Accordingly, the electrode leads 8 may pass through the through-hole 73 to be coupled to the bus bar 77.

The bus bar 77 may be in the form of a conductive metal plate, and at least a portion may be buried in the insulating frame 71 or attached to the external surface of the insulating frame 71. The battery cells 7 may be electrically connected to each other through the bus bar 77. To this end, a plurality of through-slits 78 into which electrode leads 8 are inserted may be formed in the bus bar 77, and the electrode leads 8 may be inserted into the through-slit 78 of the bus bar 77 and then bonded to the bus bar 77 using a method such as welding. Accordingly, at least a portion of an end of the electrode lead 8 may entirely pass through the bus bar 77 to be exposed to the outside of the bus bar 77.

A plurality of bus bars 77 may be disposed to be spaced apart from each other in parallel in a direction in which the battery cells 7 are stacked, and at least two battery cells 7 may be coupled to one bus bar 77.

A terminal 11 may be provided on at least one of the busbar assemblies 70. The terminal 11 may be a conductive member electrically connected to the bus bar 77 and exposed to the outside of a case 30 of the battery device 1. Accordingly, the terminal 11 may be physically/electrically connected to at least one of the bus bars 77. For example, the terminal 11 may be formed integrally with one bus bar 77. However, the present disclosure is not limited thereto, and the terminal 11 may be formed separately from the bus bar 77 and coupled to the insulating frame 71, and then the bus bar 77 and the terminal 11 may be electrically connected to each other.

An external connection member 55 may be fastened to the terminal 11. The external connection member 55 may connect one battery device 1 and a terminal 11 of another neighboring battery device 1 to each other.

The external connection member 55 may be fastened to the terminal 11 of the battery device 1 having different ends, using a fastening member such as a bolt.

When a plurality of battery devices 1 according to the present embodiment are used, respective battery devices 1 may be connected to each other in series or parallel through the external connection member 55. In addition, among the battery devices 1, some battery devices 1 may be connected to each other in series, and other battery devices 1 may be connected to each other in parallel, as necessary.

The external connection member 55 may be formed by processing a flat rod-shaped conductive member. In addition, the external connection member 55 may be formed of a flexible material. However, the present disclosure is not limited thereto, and a wire or cable may be used as the external connection member 55.

The case 30 may have an internal space in which the cell stack 20 is accommodated. And the case 30 may include a rupture portion 43 configured to be deformed by internal pressure of the case 30. At least a portion of the rupture portion 43 may have a shape of a curved surface recessed toward the internal space of the case 30. The case 30 may define an exterior of the battery device 1, and may be disposed on the outside of the cell stack 20 to protect the cell stack 20 from an external environment. At the same time, the case 30 according to the present embodiment may also be used as a heat dissipation member of the cell stack 20.

The case 30 may be formed to entirely or partially surround the cell stack 20. The case 30 may be formed of a metal material to ensure rigidity, but the present disclosure is not limited thereto. In addition, in order to increase a heat dissipation effect, at least a portion of the case 30 may be formed of aluminum.

In order to easily manufacture the battery device 1, the case 30 may be divided into a plurality of cases. The case 30 according to the present embodiment may include a first case 30a covering an upper portion of the cell stack 20, a second case 30b covering a lower portion and a first side surface of the cell stack 20, and a third case 30c covering a second side surface of the cell stack 20.

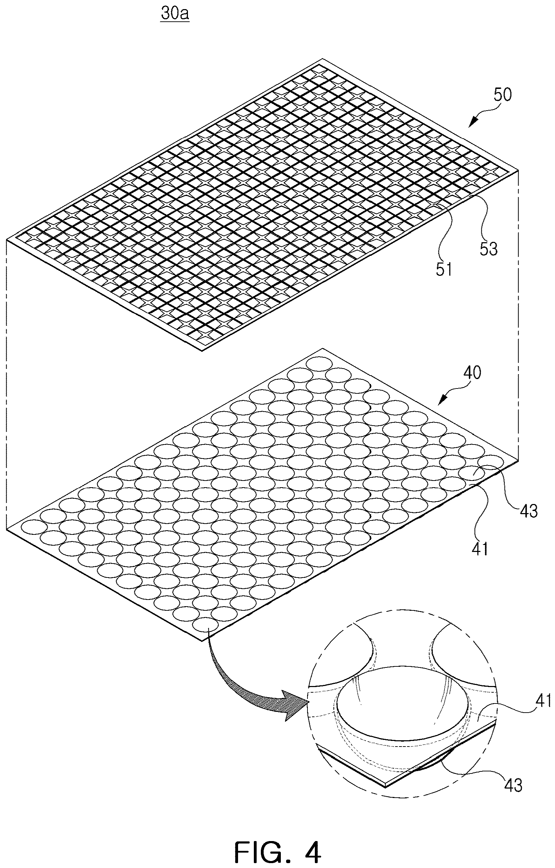

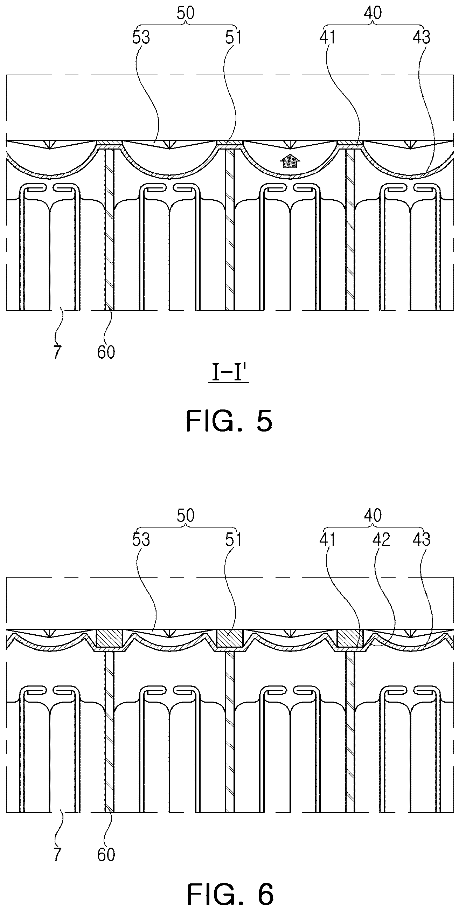

FIG. 4 is an exploded perspective view of the first case illustrated in FIG. 2. FIG. 5 is a partial cross-sectional view taken along line I-I' of FIG. 1.

Referring to FIGS. 4 and 5 together, the first case 30a may be formed to cover an entire upper surface of the cell stack 20, and may include a rupture sheet 40 and a cutter 50.

The rupture sheet 40 may include a first frame 41, and at least one rupture portion 43. The rupture sheet 40 may be disposed on at least one side of the cell stack 20, and the rupture portion 43 may be distributed throughout the rupture sheet 40.

The first frame 41 may be formed to be flat, and may form an overall exterior of the rupture sheet 40, and the rupture portion 43 may be disposed in the first frame 41. The rupture portion 43 may be configured to be preferentially ruptured when internal pressure of the battery device 1 increases. A plurality of rupture portions 43 may be distributed on the entire upper surface of the cell stack 20, and may be formed of a material that is cuttable by a blade 53 to be described below of the cutter 50 during contact with the blade 53, and may be formed to have a thickness that is cuttable by the blade 53.

The rupture portion 43 may be configured to be deformed in shape by the internal pressure of case 30 and to come into contact with the blade 53. Therefore, the rupture portion 43 may be disposed between the blade 53 and the cell stack 20. In the present embodiment, the rupture portion 43 may be formed to convexly protrude from the first frame 41 toward the cell stack 20. For example, each rupture portion 43 may be formed to have a hemispherical shape, and multiple rupture portions 43 may be disposed in the form of a lattice.

At least a portion of the rupture portion 43 may have a shape of a curved surface recessed toward an internal space of the case 30. For example, the rupture portion 43 may protrude toward the cell stack 20.

The first frame 41 and the rupture portion 43 may be integrally formed. For example, one sheet may be divided into the rupture portion 43 and the first frame 41 by a drawing process. In this case, the rupture portion 43 may be formed to be thinner than the first frame 41. However, the present disclosure is not limited thereto, and the first frame 41 and the rupture portion 43 may be manufactured separately and coupled to each other, as necessary.

The rupture portion 43 according to the present embodiment may be formed of a metal thin film. For example, the rupture portion 43 may be formed of an aluminum thin film. However, the present disclosure is not limited thereto, and various materials that are easily rupturable by the blade 53 to be described below may be used.

The cutter 50 may be stacked on an upper portion of the rupture sheet 40. For example, the cutter 50 may be disposed on the outside of the rupture sheet 40.

The cutter 50 may include a second frame 51, and at least one blade 53 disposed in the second frame 51. The blade 53 may be disposed on the at least one surface of the case 30, and the blade 53 is configured to rupture the rupture portion 43. The blade 53 may be disposed in a position corresponding to that of the rupture portion 43, and the blade 43 may be configured to come into contact with the rupture portion 43 as the rupture portion 43 is deformed. Accordingly, the number of blades 53 may be provided to be the same as the number of rupture portions 43, and each blade 53 may be disposed to oppose a corresponding rupture portion 43.

When gas is generated in the battery cell 7 and internal pressure of the battery device 1 increases, the rupture portion 43 may convexly protrude toward the blade 53 (in a direction of an arrow in FIG. 5) due to an increase in the internal pressure. In such a process, the rupture portion 43 may come into contact with an edge of the blade 53, and thus at least a portion of the rupture portion 43 may be cut by the blade 53. In addition, gas or explosion by-products formed in the battery device 1 may be discharged to the outside of the battery device 1 through a gap formed by cutting the rupture portion 43.

Accordingly, the edge of the blade 53 may be disposed to come into contact with the rupture portion 43 when the rupture portion 43 protrudes toward the blade 53. For example, the edge of the blade 53 may be disposed to oppose the rupture portion 43, and at least a portion of the edge of the blade 53 may be disposed to oppose a convex central portion (a most convex portion) of the rupture portion 43. In order to increase contact reliability between the blade 53 and the rupture portion 43, in the present embodiment, the edge of the blade 53 may be disposed to protrude toward the rupture portion 43 rather than the second frame 51. For example, the blade 53 is disposed to protrude from the second frame 51 toward the rupture portion 43. However, the present disclosure is not limited thereto.

In the present embodiment, the blade 53 may be formed to have a "+" shape. However, the present disclosure is not limited thereto, and the blade 53 may be modified into various forms capable of cutting or perforating the rupture portion 43 during contact with the rupture portion 43, such as the blade 53 having a "-" shape or the blade 53 that is in the form of a sharp pin.

The blade 53 may be formed integrally with the second frame 51, such that a movement thereof may be fixed. Accordingly, even when the blade 53 comes into contact with the rupture portion 43, a movement thereof in a direction of being pressed by the rupture portion 43 may be suppressed.

The second frame 51 and the blade 53 may be integrally formed. For example, one sheet may be divided into the second frame 51 and the blade 53 by a drawing process. However, the present disclosure is not limited thereto, and the second frame 51 and the blade 53 may be manufactured separately and coupled to each other, as necessary.

The second case 30b may include a lower plate 31 covering a lower portion of the cell stack 20, and a side plate 32 covering two first side surfaces, among side surfaces of the cell stack 20. In the present embodiment, the battery cell 7 may include electrode leads 8 disposed in opposite directions. In the cell stack 20, each battery cell 7 may include the electrode leads 8 disposed to be oriented toward the two first side surfaces. Accordingly, the side plate 32 may be disposed to oppose the electrode leads 8 of the battery cells 7.

In the battery device 1 according to the present embodiment, the terminal 11, electrically connected to the outside of the battery device 1, may be disposed to protrude toward the outside of the side plate 32. Accordingly, the side plate 32 may be understood as an element disposed on a surface of the case 30 on which the terminal 11 is disposed.

The lower plate 31 may extend from a lower end of the side plate 32 to a lower portion of the cell stack 20 to entirely or partially support a lower surface of the cell stack 20.

In the present embodiment, the side plate 32 may be formed integrally with the lower plate 31. For example, one sheet of metal plate may be bent and divided into the side plate 32 and the lower plate 31. However, the present disclosure is not limited thereto, and the side plate 32 and the lower plate 31 may be provided separately and coupled to each other.

In addition, in the present embodiment, a case in which the entire second case 30b is formed of the same material is described as an example, but the lower plate 31 and the side plate 32 may be formed of different materials, as necessary. For example, various modifications may be made as necessary, such as the lower plate 31 formed of aluminum and the side plate 32 formed of steel or stainless steel.

A bus bar cover 90 may be interposed between the second case 30b and the cell stack 20.

The bus bar cover 90 may be formed of an insulating material such as insulating resin or mica, and may be disposed between the bus bar assembly 70 and the side plate of the second case 30b. Accordingly, the bus bar cover 90 may be disposed such that one surface thereof opposes the bus bar assembly 70 and the other surface thereof oppose the side plate, and may be coupled to the bus bar assembly 70 in a form in which the bus bar cover 90 covers the entire bus bar 77.

The bus bar cover 90 may be provided to ensure insulation between the bus bar 77 and the side plate. Accordingly, the bus bar cover 90 may have various forms capable of covering the entire bus bars 77.

The third case 30c may cover side surfaces on which the electrode lead 8 is not disposed, among side surfaces of the battery device 1, that is, opposite side surfaces on which the bus bar assembly 70 is not disposed. The third case 30c may be fixedly fastened to the first case 30a and the second case 30b.

The first case 30a, the second case 30b, and the third case 30c may be formed of a metal material, but the present disclosure is not limited thereto, and may be partially or entirely formed of an insulating material such as resin, as necessary. In addition, the first case 30a, the second case 30b, and the third case 30c may be coupled to each other using a method such as welding or the like. However, the present disclosure is not limited thereto, and various modifications may be made, such as coupling in a sliding manner or coupling using a fastening member such as a bolt or screw.

In the battery device according to the present embodiment described above, when the internal pressure of the battery device 1 increases due to an abnormality in the battery cell 7, the rupture portion 43 may be ruptured and explosion by-products may be discharged to the outside of the battery device 1. In this case, when one of multiple rupture portions 43 is ruptured, explosion by-products may be discharged through the corresponding rupture portion 43 and the internal pressure may decrease, such that the other rupture portions 43 may be maintained in an unruptured state. Accordingly, the explosion by-products, discharged to the outside of the battery device 1, may be prevented from flowing into other battery cells 7 through the other rupture portions 43.

The present disclosure is not limited to the above-described embodiments, and various modifications may be made.

FIG. 6 is a cross-sectional view of a battery device according to another embodiment of the present disclosure.

Referring to FIG. 6, a rupture sheet 40 according to the present embodiment may include a rupture portion 43 disposed in a protruding frame 42 extending to one side of the rupture sheet 40 from a first frame 41.

The protruding frame 42 may be formed to protrude from the first frame 41 by a certain length, and the rupture portion 43 may be formed to extend from an end of the protruding frame 42.

When a protruding length of the rupture portion 43 is less than a protruding length of the protruding frame 42, the entire rupture portion 43 may be disposed in an internal region of the protruding frame 42. However, the present disclosure is not limited thereto.

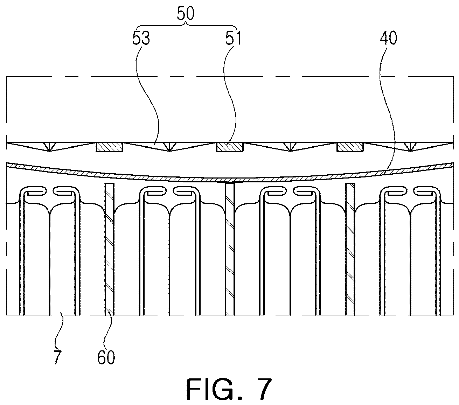

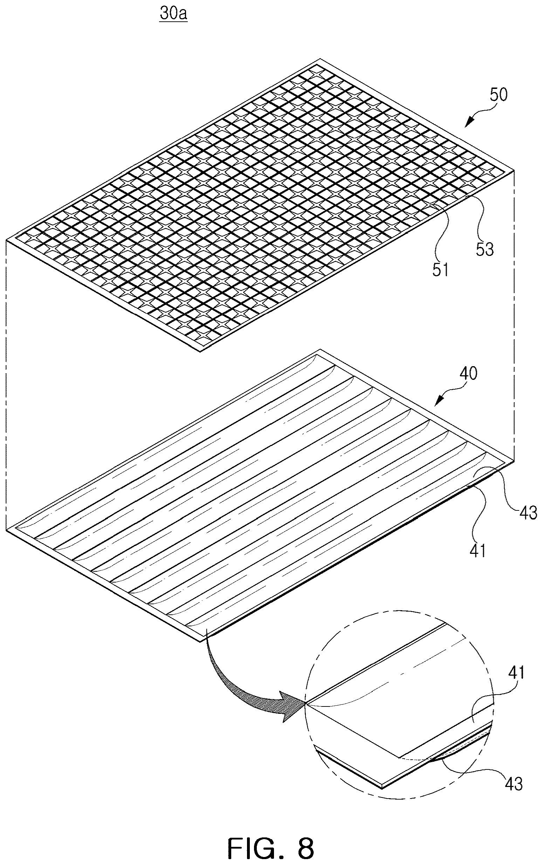

FIG. 7 is a cross-sectional view of a battery device according to another embodiment of the present disclosure, and FIG. 8 is an exploded perspective view of the first case illustrated in FIG. 7.

Referring to FIGS. 7 and 8, In the present embodiment, the plurality of blades 53 are disposed to correspond to one rupture portion 43. In addition, the rupture portion may be formed to have a shape of a groove having a rectangular entrance, rather than a hemispherical shape. However, a configuration in which the rupture portion 43 is convexly disposed toward a cell stack 20 and is convexly deformed toward the blade 53 by internal pressure of a battery cell may be the same as that of the above-described embodiment.

In the present embodiment, a case in which one rupture portion 43 is disposed to correspond to multiple blades 53 disposed in a row is described as an example, but the present disclosure is not limited thereto, and an arrangement structure or shape of the blades 53 corresponding to the one rupture portion 43 may be modified in various manners.

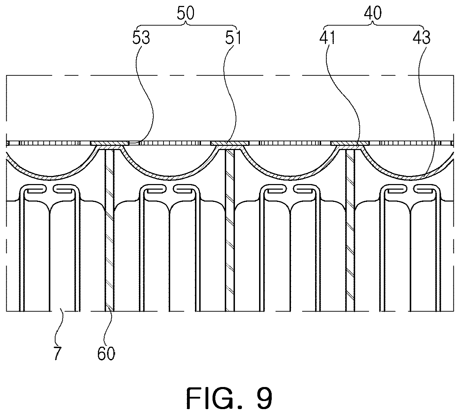

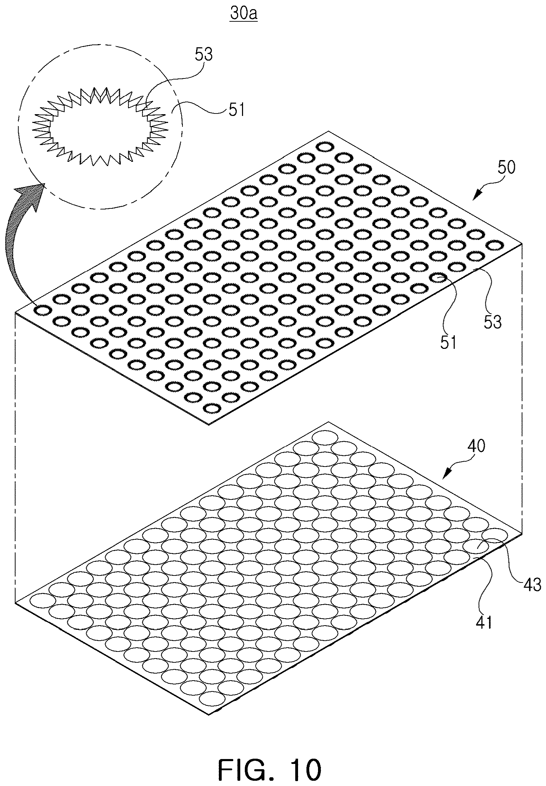

FIG. 9 is a cross-sectional view of a battery device according to another embodiment of the present disclosure. FIG. 10 is an exploded perspective view of the first case illustrated in FIG. 9.

Referring to FIGS. 9 and 10, in the battery device according to the present embodiment, an edge of a blade 53 may not be disposed to oppose a rupture portion 43 but may be disposed on the same plane as that of a second frame 51.

In the present embodiment, the edge may be disposed to correspond to a peripheral portion of the rupture portion 43 rather than a central portion of the rupture portion 43, and may be formed to have a sawtooth shape. Accordingly, when the rupture portion 43 outwardly protrudes, the sawtooth-shaped edge may come into contact with an edge of the rupture portion 43 to cut the rupture portion 43.

In the battery device according to the present embodiment configured as described above, a blade 53 of a cutter 50 may be disposed within the thickness range of the second frame 51, such that a thickness of the cutter 50 may be minimized, thereby reducing a thickness of the first case 30a and an overall thickness of the battery device.

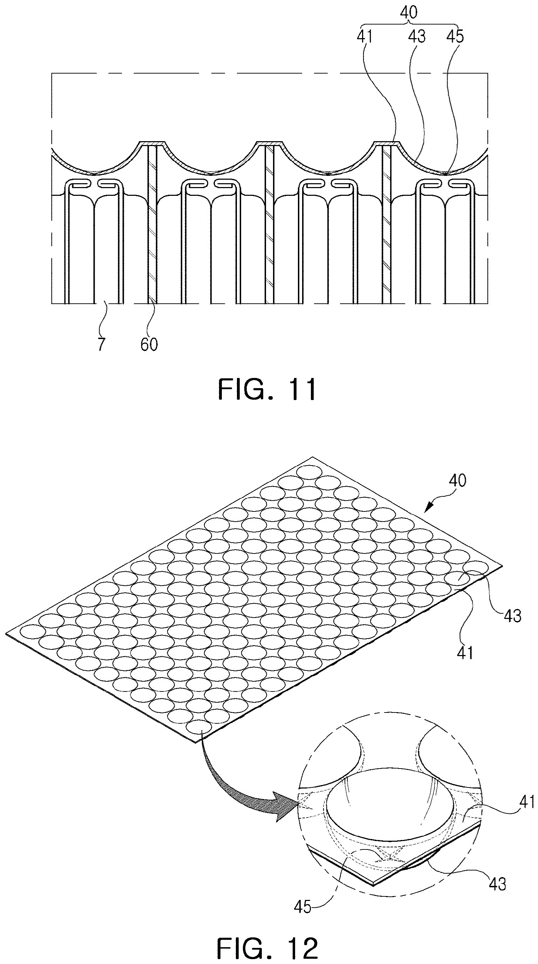

FIG. 11 is a cross-sectional view of a battery device according to another embodiment of the present disclosure. FIG. 12 is a perspective view of the first case illustrated in FIG. 11.

Referring to FIGS. 11 and 12, the battery device according to the present embodiment may include a rupture sheet 40 configured to be rupturable by internal pressure of the battery device.

The rupture sheet 40 may be ruptured by the internal pressure of the battery device without another component (for example, the cutter 50 of FIGS. 1 to 10) damaging the rupture sheet 40 itself. That is, the battery device according to the present embodiment may include only the rupture sheet 40 without the cutter 50.

In the rupture sheet 40 according to the present embodiment, a rupture groove 45 may be formed in a rupture portion 43. The rupture groove 45 of the rupture portion 43 may be formed to be thinner than other portions of the rupture portion 43 to induce rupture such that the rupture groove 45 of the rupture portion 43 is preferentially ruptured at a lower pressure. For example, the rupture groove 45 may be formed to have a thickness less than or equal to a half of that of the other portions of the rupture portion 43. However, the present disclosure is not limited thereto.

The rupture groove 45 of the rupture sheet 40 may be damaged by the internal pressure of the battery device. For example, the internal pressure may directly damage and open the rupture groove 45, formed to be thinner than the other portions of the rupture portion 43. Alternatively, in the process of the rupture groove 45 being deformed due to the internal pressure, the rupture groove 45, having rigidity lower than that of the other portions of the rupture portion 43, may be damage and opened.

In the present embodiment, the rupture groove 45 may be formed to have a '+' shape with respect to a convex central portion of the rupture portion 43. However, the present disclosure is not limited thereto, and the rupture groove 45 may be formed to have various shapes as long as the rupture groove 45 may preferentially be ruptured by the internal pressure of the battery device.

The rupture sheet 40 according to the present embodiment may also be applied to the above-described embodiments including the cutter 50.

Only specific examples of implementations of certain embodiments are described. Variations, improvements and enhancements of the disclosed embodiments and other embodiments may be made based on the disclosure of this patent document.

For example, in the above-described embodiments, a case in which a rupture portion is disposed on a portion of a case, disposed on an upper portion of a cell stack, is described as an example. However, the rupture portion may be disposed on a lower plate or a side plate, or the rupture portion may be disposed on various surfaces of the case, as necessary. In addition, respective embodiments may be implemented in combination with each other.

## Claims

1. A battery device comprising:
a cell stack in which a plurality of battery cells are stacked; and
a case configured to accommodate the cell stack therein,
wherein a rupture portion, configured to be rupturable by internal pressure of the case, is disposed on at least one surface of the case.

2. The battery device of claim 1, wherein the rupture portion has a rupture groove formed to be thinner than other portions of the rupture portion.

3. The battery device of any of claims 1 or 2, further comprising:
a blade disposed on the at least one surface of the case, the blade configured to rupture the rupture portion.

4. The battery device of claim 3, wherein the rupture portion is configured to be deformed in shape by the internal pressure and to come into contact with the blade.

5. The battery device of claim 3, wherein
the case includes:
a rupture sheet including a first frame, and the rupture portion disposed in the first frame; and
a cutter including a second frame, and the blade disposed in the second frame,
wherein the cutter is disposed on the outside of the rupture sheet, and the blade is disposed in a position corresponding to that of the rupture portion.

6. The battery device of claim 3, wherein the blade includes a plurality of blades, and the plurality of blades are disposed to correspond to one rupture portion.

7. The battery device of claim 3, wherein
the rupture portion is formed to have a hemispherical shape and protrudes toward the cell stack, and
the rupture portion protrudes toward the blade and comes into contact with the blade, when the internal pressure of the case increases.

8. The battery device of claim 7, wherein at least a portion of an edge of the blade is disposed to oppose a convex central portion of the rupture portion.

9. The battery device of claim 5, wherein
the rupture sheet further includes a protruding frame formed to protrude from the first frame, and
the rupture portion is formed to extend from an end of the protruding frame.

10. The battery device of claim 5, wherein the blade is disposed to protrude from the second frame toward the rupture portion.

11. The battery device of claim 5, wherein the blade is disposed on the same plane as that of the second frame, and is formed to have a sawtooth shape.

12. A battery device comprising:
a cell stack in which a plurality of battery cells are stacked; and
a case having an internal space in which the cell stack is accommodated,
wherein the case includes a rupture portion configured to be deformed by internal pressure of the case, and
at least a portion of the rupture portion has a shape of a curved surface recessed toward the internal space of the case.

13. The battery device of claim 12, further comprising:
a rupture sheet disposed on at least one side of the cell stack,
wherein the rupture portion is distributed throughout the rupture sheet.

14. The battery device of claim 12, further comprising:
a blade configured to come into contact with the rupture portion as the rupture portion is deformed.

15. The battery device of claim 14, wherein the rupture portion is disposed between the blade and the cell stack.
